Europäisches Patentamt

European Patent Office

Office européen des brevets

(11) Publication number: **0 221 752**
A2

## EUROPEAN PATENT APPLICATION

(21) Application number: 86308370.5

(22) Date of filing: 28.10.86

(51) Int. Cl.⁴: **C 23 C 14/34**

(30) Priority: 29.10.85 JP 242498/85

(43) Date of publication of application:
13.05.87 Bulletin 87/20

(84) Designated Contracting States:
DE FR GB IT

(71) Applicant: TOYOTA JIDOSHA KABUSHIKI KAISHA
1, Toyota-cho Toyota-shi
Aichi-ken 471(JP)

(72) Inventor: Kawasaki, Minoru Toyota Jidosha K.K.
1 Toyota-Cho
Toyota-shi Aichi-ken(JP)

(74) Representative: Ben-Nathan, Laurence Albert et al,
c/o MICHAEL BURNSIDE & PARTNERS 2 Serjeants' Inn
Fleet Street
London EC4Y 1HL(GB)

(54) High energy padding method utilizing coating containing copper.

(57) In this high energy padding method for forming a padding layer of padding metallic material on the surface of a base piece of cast iron material, a coating of metallic material containing copper is overlaid on the surface of the base piece of cast iron material, and a layer of the metallic padding material is deposited on the surface of the base piece of cast iron material over the copper containing coating metallic material layer thereon while using a relatively high energy density energy source, such as a laser, as a source of heat. The thickness of the overlaid copper containing coating metallic material layer may be between about 30 microns and about 500 microns. The copper content of the metallic material containing copper may be between about 80% and about 100%. And the overlaid copper containing coating metallic layer may be likewise formed by depositing of a metallic material containing copper on the surface of the piece of cast iron material while using a relatively high energy density energy source, such as a laser, as a source of heat.

FIG. 1

Croydon Printing Company Ltd.

EP 0 221 752 A2

# HIGH ENERGY PADDING METHOD UTILIZING COATING CONTAINING COPPER

## BACKGROUND OF THE INVENTION

The present invention relates to a method for forming a padding layer on a base metal substrate block, and more particularly relates to such a method for forming a padding layer on a substrate block which is made of cast iron, in which a high density energy source, such as a laser, a TIG arc, or an electron beam, is utilized for melting the padding material layer.

The present invention has been described in Japanese Patent Application Serial No. ....60-242498.......... (1985), filed by an applicant the same as the applicant or the entity assigned or owed duty of assignment of the present patent application; and the present patent application hereby incorporates into itself by reference the text of said Japanese Patent Applications and the claims and the drawings thereof; a copy is appended to the present application.

In order to raise the corrosion resistance, the thermal resistance, and the abrasion resistance of a piece of cast iron material, in the known art it has been conceived of and has been practiced to overlay a padding layer of metal or metal alloy of superior such resistance characteristics over the surface of said piece of cast iron material. As in the case of welding relating to such cast iron material, the known prior art methods of providing such padding layers to cast iron materials have involved the melting of the cast iron base metal material, after which, and prior to the padding step, the cast iron material has been preheated in order to avoid the creation of cracks, which might be caused by the crystallization of cementite in the padding material. However, in the case of a welding electrode, an expensive high carbon type of material of the Ni base type is typically selected, in order to suppress such crystallization of cementite, and in order for the base portion of the deposited material to be made to consist of austentite.

However, this type of process is fraught with problems which will now be outlined. In such a process of padding a cast iron base material, inevitably CO or $CO_2$ gas is generated by the burning of the graphite which is contained in such cast iron material, and such CO or $CO_2$ gas is captured in the layers of molten material, and thereby blow holes are easily created in the padding metal material layer. In particular, the effects upon abrasion resistance and upon thermal resistance of such a padding metal material layer due to the generation of such blow holes in the surface of the padding metal material layer are particularly deleterious and disadvantageous, and hence a problem arises in that the abrasion resistance and the thermal resistance of the surface of such a cast iron material cannot always be favorably and reliably raised according to such an above described prior art padding method.

## SUMMARY OF THE INVENTION

The inventor of the present invention has considered the various problems detailed above in the case of a prior art padding method, from the point of view of the desirability of raising the abrasion resistance and the thermal resistance of the surface of such a cast iron material; and, as a result of various experimental researches, the present inventor has come to the knowledge that it is effective to form a coating of copper (Cu) or of a copper alloy in advance on the surface of the cast iron material to be padded, afterwards depositing the padding material layer over said coating of copper or copper alloy (hereinafter spoken of as "material containing copper", by utilizing a high density energy source such as a laser, a TIG arc, or an electron beam as an energy source for heating. And, as a result of various experimental researches which will be detailed later in this specification, the present inventor has found that it is possible to perform padding, in such a case, without the creation of defects such as blow holes or cracks in the resultant product, even although preheating of the work piece is not performed. Moreover, the present inventor has discovered that, without being limited to a Ni alloy as the material to be used for forming the padding material layer, it is possible to use an optional alloy material for such a padding layer in view of the various characteristics of such padding layer alloy material such as abrasion resistance, thermal resistance, and corrosion resistance, as may be appropriate for the surface of the finished padded cast iron material.

Accordingly, it is the primary object of the present invention to provide a high energy padding method, which avoids the problems detailed above.

It is a further object of the present invention to provide such a high energy padding method, which allows a padding layer to be laid over a base cast iron work piece.

It is a further object of the present invention to provide such a high energy padding method, which allows the composition of the material for the padding layer to be arbitrary.

It is a further object of the present invention to provide such a high energy padding method, which avoids the creation of defects such as blow holes or cracks in the finished product.

It is a further object of the present invention to provide such a high energy padding method, which avoids the evolution of CO or $CO_2$ gas caused by combustion of graphite in the cast iron base material.

It is a further object of the present invention to provide such a high energy padding method, which does not require the preheating of the work piece.

According to the most general aspect of the present invention, these and other objects are attained by a high energy padding method for forming a padding layer of padding metallic material on the surface of a base piece of cast iron material, comprising the steps of: (a) overlaying a coating of metallic material containing copper on said surface of said base piece of cast iron material; and: (b) depositing a layer of said metallic padding material on said surface of said base piece of cast iron material over said copper containing coating metallic material layer thereon while using a relatively high energy density energy source as a source of heat.

According to such a method as specified above, there is overlaid a coating of said metallic material including copper, i.e. of copper or of a copper alloy, on the surface of the cast iron material piece to be padded. The supplying of oxygen to the graphite contained in the cast iron material to oxidize it is obstructed or prevented by this overlaid coating, and according to this the combustion of the graphite and the consequent evolution of CO or $CO_2$ gas is prevented, so that the creation of flaws such as blow holes or cracks in the final product is inhibited or prevented.

Thus, according to the present invention, the coating of Cu or of a Cu alloy is formed, before the padding process, on the surface of the cast iron material piece which is to be padded, and thus the Fe and the C in said cast iron material base piece are prevented from direct exposure to the padding metal while it is in the molten condition. Further, the crystallization of cementite from the molten padding material is inhibited, and hence the cracking of the padding material layer which is caused by such cementite crystallization is avoided, and accordingly it becomes possible to avoid the preheating of the cast iron base material piece before the performance of the padding process.

According to the results of the experimental research carried out by the present inventor and his minions, in the event that the Cu or Cu alloy coating is too thin, the above described action will not be fully or properly manifested, while on the other hand, in the converse event that the Cu or Cu alloy coating is too thick, the coating will penetrate into the molten padding material in relatively large quantities, so that an undesirable weakening and deterioration of the characteristics of the padding metal material layer may result. As a result, according to a particular specialization of the present invention, the above specified and other objects are more particularly attained by a high energy padding method as specified above, wherein the thickness of said overlaid copper containing coating metallic material layer is between about 30 microns and about 500 microns; and, more preferably, said coating metallic material layer thickness should be between about 50 microns and about 200 microns.

Also, according to the results of the experimental researches performed by the present inventor, it has been determined that the Cu alloy used in forming the coating layer may be optionally chosen from among such alloys as Cu - Ni alloy, Cu - Sn alloy, Cu - Al alloy, and the like. However, it has been determined that, if the Cu content is not sufficiently high, the advantageous action provided by this coating layer will not be sufficiently manifested. Accordingly, more preferably, according to another particular specialization of the present invention, the above specified and other objects are more particularly attained by a high energy padding method of the type defined first above, wherein the copper content of said metallic material containing copper is between about 80% and about 100%.

Further, the formation of the Cu or Cu alloy coating layer on the surface of the cast iron work piece may be carried out by a galvanizing process or by a choline process, but both of these processes are typically performed according to batch processing, and further in these processes the formation of the coating layer only on the specified or desired portion of the surface of the cast iron work piece is rather difficult. Therefore, according to the results of said experimental researches performed by the present inventor, to be described in detail hereinafter, it has been determined that it is most desirable, according to one more particular specialization of the present invention, for the coating of the Cu or Cu alloy metal layer on said surface of said piece of cast iron material to be performed using an inline type method, and preferably for such depositing of said metallic material containing copper on said surface of said piece of cast iron material to be performed by using a relatively high energy density energy source, such as a laser, a TIG arc, or an electron beam, as a source of heat. This concept allows the coating to be laid only on the desired portion of the cast iron work piece, and the costs for the the materials consumed and for the energy utilized are accordingly much reduced.

Further, according to others of the results of said experimental researches performed by the present inventor, also to be described in detail hereinafter, it has been determined that it is most desirable for the cooling of the layer of padding material which has been deposited using said high density heat source on the surface of the cast iron work piece over the coating layer, and also for the cooling of the coating formed of Cu or an alloy containing Cu after it has been likewise deposited, and indeed also for the cooling of the surface portion of the cast iron material itself, to be performed by endothermic absorption by the cast iron material itself, without the provision of any particular external cooling means. According to this concept, no separate cooling apparatus is required for cooling the deposited padding material or the surface of the cast iron work piece, and, since these elements are nevertheless well quenched and cooled, it is possible to form a padding metal material layer of a fine crystalline structure.

Further, in the method of the present invention, the process of depositing the padding metal material layer, as well as the process of depositing the initial coating layer of Cu or a Cu alloy, by using a high density heating source, are preferably performed in an inert atmosphere. According to this method, it is possible to avoid the creation of disadvantageous features originating by the oxidization of the padding metal material, and the like. In this case, the inert atmosphere may be created by a flux which is deposited, but however from the point of view of reliability, avoidance of intermixture of slag, and of operability and so on, it is considered to be preferable to employ an inert atmosphere such as one incorporating helium or argon, or to employ a low pressure ambient atmosphere such as a vacuum.

Moreover, the high density energy source utilized in the practice of the present invention may be a laser, a TIG arc, or an electron beam. It is possible to utilize a laser even in the event that there is abundant padding material powder present, and the electrical resistance of the cast iron material is comparatively high, and, in the regard that it is comparatively easy to adjust, by adjusting the focus, the effectiveness of the heating by laser in relation to the padding material powder, the use of a laser is considered to be superior to the the use of other high energy sources. The use of a TIG arc or of an electron beam is considered to be superior to the use of a laser in the point that, when the padding material powder is melted, said melted material will be agitated by electromagnetic agitation effects. Further, whereas generally an electron beam must be used in a vacuum atmosphere, a laser or a TIG arc may be used in an inert atmosphere, and accordingly from the point of view of saving the requirement for the provision of a vacuum apparatus required to create and to maintain a vacuum atmosphere, and from the point of view of economy and of convenience in operation, the use of a laser or the use of a TIG arc are considered to preferable to the use of an electron beam. On the other hand, it is possible to make the heated region be extremely small with the use of an electron beam as a heat source, and accordingly, in the case that the characteristics implied by this fact are considered to be important or necessary, the use of an electron beam is considered to be preferable to the use of a TIG arc or the use of a laser. Accordingly, in response to variations in the material utilized for the padding metal material, and in response to the shape, the surface dimensions, and the thickness required for the padding metal material layer to be formed, it might be preferable to utilize one or another of a laser, a TIG arc, or an electron beam for performing the padding process of the present invention.

Further, with regard to the question of how the Cu or Cu alloy material is to be disposed on the surface of the cast iron base material, in the event that such Cu or Cu alloy material is to be disposed in powder form which is the typical case, it may be performed simply to lay a layer of such Cu or Cu alloy material powder or dust as a layer on the surface of the cast iron base material, and further, in the case that as a high energy source there is utilized one or another of a laser, a TIG arc, or an electron beam, it is possible simply to supply such Cu or Cu alloy material powder continuously to the surface of the cast iron base material just in advance of the path of travel of the hot spot created by such a high energy source, i.e. in advance of its scanning direction. However, in order to prevent scattering of such Cu or Cu alloy material powder, and in order to inhibit the spreading thereof, a pressed compact of such powder may be disposed on the surface of the cast iron base material, a channel may be formed in said surface of said cast iron base material, and the Cu or Cu alloy material powder may be press formed thereinto, or a paste may be formed by adding to the Cu or Cu alloy material powder a caking agent such as an aqueous solution of PVA (polyvinyl alcohol) or a mixture of acrylic and thinner, said paste being agglutinated to the surface of the cast iron base material by painting by using a spatula or by a tube method. However, in the event that such a paste is formed, it is considered to be desirable that said paste be sufficiently dried at a temperature range and in an atmosphere such as not to induce surface oxidization of the resultant layer of Cu or Cu alloy material powder, and so as not to engender the creation of blow holes in the surface of said powder layer, both of which are liable to result from such drying. It is further considered to be desirable that the application of heat from the high density energy source such as a laser should be provided while the paste layer is in a condition of containing substantially no moisture.

It should be noted that, in the present specification, all percentages are percentages by weight and all measurements are given in units of the metric system.

## BRIEF DESCRIPTION OF THE DRAWINGS

The present invention will now be described with respect to the preferred embodiments thereof, and with reference to the illustrative drawings appended hereto, which however are provided for the purposes of explanation and exemplification only, and are not intended to be limitative of the scope of the present invention in any way, since this scope is to be delimited solely by the accompanying claims. With relation to the figures, spatial terms are to be understood as referring only to the orientation on the drawing paper of the illustrations of the relevant parts, unless otherwise specified; like reference numerals, unless otherwise so specified, denote the same parts and gaps and spaces and so on in the various figures relating to one preferred embodiment, and like parts and gaps and spaces and so on in the figures relating to different preferred embodiments; and:

Fig. 1 is a side view showing a first stage of practice of all of the preferred embodiments of the high energy padding method of the present invention, as well as of two comparison methods, in which a coating layer is formed upon a base metal substrate block;

Fig. 2 is a side perspective view applying again to all of said preferred embodiments and to said two comparison methods also, showing the resultant base metal block after said first stage of practice, with a swath of coating material laid thereon;

Fig. 3 is a transverse cross sectional photomicrograph taken at a magnification of 10X, showing the cross section of the base metal block with the coating material swath laid thereon, produced according to the first preferred embodiment of the present invention;

- 12 -

0221752

Fig. 4 is a side view, similar to Fig. 1 for the first stage of practice and showing a second stage of practice of all of said preferred embodiments of the high energy padding method of the present invention, as well as of said two comparison methods, in which a padding layer is formed over said coating layer already formed upon said base metal substrate block;

Fig. 5 is a side perspective view, similar to Fig. 2 for the first stage of practice and applying again to all of said preferred embodiments and to said two comparison methods also, showing the resultant base metal block after said second stage of practice, with a swath of padding material overlaid upon said coating material swath laid thereon;

Fig. 6 is a transverse cross sectional photomicrograph taken at a magnification of 37.5X, showing the cross section of the base metal block with the padding material swath laid thereon, produced according to the first preferred embodiment of the present invention;

Fig. 7 is a similar transverse cross sectional photomicrograph also taken at a magnification of 37.5X, showing the cross section of a base metal block with a padding material swath laid thereon, produced according to a first comparison example, not according to the present invention;

Fig. 8 is a similar transverse cross sectional photomicrograph also taken at a magnification of 37.5X, showing the cross section of a base metal block with a padding material swath laid thereon, produced according to a second comparison example, not according to the present invention;

Fig. 9 is a transverse cross sectional photomicrograph this time taken at a magnification of 10X, showing the cross section of a base metal block with a padding material swath laid thereon, produced according to the second preferred embodiment of the present invention; and:

Fig. 10 is a similar transverse cross sectional photomicrograph also taken at a magnification of 10X, showing the cross section of a base metal block with a padding material swath laid thereon, produced according to the third preferred embodiment of the present invention.

## DESCRIPTION OF THE PREFERRED EMBODIMENTS

The present invention will now be described with reference to the preferred embodiments thereof, and with reference to the figures.

### *GENERAL METHOD: THE COATING STAGE*

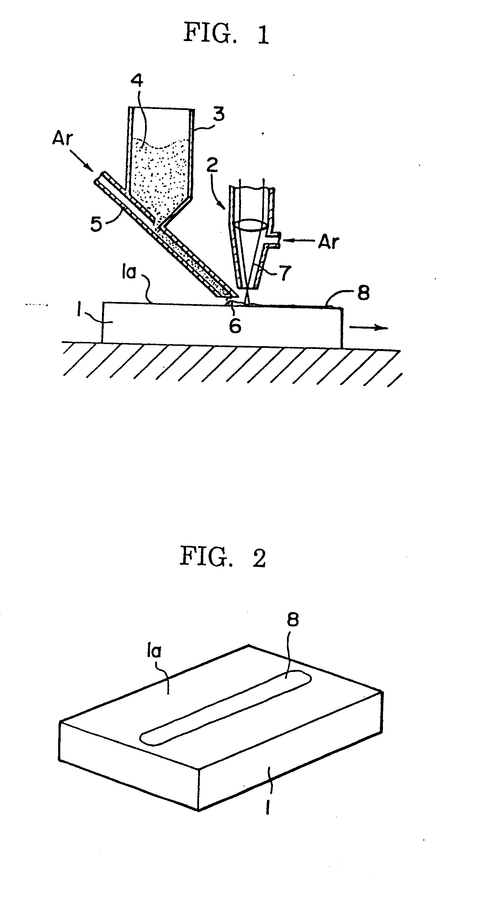

Figs. 1, 2, 4, and 5 show the first and the second general method of practice of all of the preferred embodiments of the padding method of the present invention, as well as of two comparison examples which will be described.

Referring first to the view of Fig. 1 which is a general side view of the first stage of practice of the present invention, the reference numeral 1 therein denotes a block of base metal, which in all the three preferred embodiments of the present invention which will be described was made of gray cast iron of composition about 3.2% to about 3.6% C, about 1.5% to about 2.4% Si, about 0.5% to about 0.8% Mn, below about 0.1% P, below about 0.15% S, and remainder essentially Fe, containing A type graphite, and had dimensions about 70 x 40 x 10 mm; and the reference numeral 2 denotes a laser gun which incorporated, in these preferred embodiments, a convex lens which focused and concentrated a laser beam which was produced by a per se conventional type of laser not particularly shown in the figures (located generally above the Fig. 1 apparatus). The laser beam shone through said convex lens and was converted into a converging light beam 7 thereby, and this converging light beam 7 fell out from the tip of the laser gun 2 in a focus upon the upper surface la of the base metal block 1 as its rays converged. Meanwhile, the base metal block 1 was moved by a driving means, not particularly shown in the figures, in the rightwards direction as seen in Fig. 1 so as to advance the process along its surface, along the approximate center line of the 70 x 40 mm upper surface la of the base metal block 1. In the way of the swath described by the laser beam focus there was spread a trail 6 of powder for forming a coating along said approximate center line of the 70 x 40 mm upper surface la of the base metal block 1, said coating powder 6, which in each of the preferred embodiments of the present invention which will be described was copper or an alloy of copper, being supplied through a pipe 5 from a hopper 3 which contained a quantity 4 of said powder for coating; a stream of argon gas as a carrier gas was blown through said pipe 5 for aiding with the transport of the coating powder 6, and further argon gas as a shield gas was directed through the laser gun 2 to form a shield around the heated work area. This quantity of coating powder 6 was locally melted onto the surface of the base metal block 1 by the laser beam focus as it described its swath, and in the trail of said laser beam focus solidified to form a coating layer or trail 8, containing copper, along said 70 x 40 mm upper surface of the base metal block 1, as shown in perspective view in Fig. 2 which shows the work piece after this first stage of practice of the method of the present invention. The cooling of the work piece, i.e. of the trail 8 of melted coating powder and of the upper surface portion 1a of the base metal block 1, was accomplished in each case principally by endothermic absorption. In the case of each of the preferred embodiments of the present invention which will be described, the width of the coating layer 8 was approximately 5 mm, its length was approximately 60 mm, and its thickness was approximately 0.2 mm.

## *THE FIRST PREFERRED EMBODIMENT*

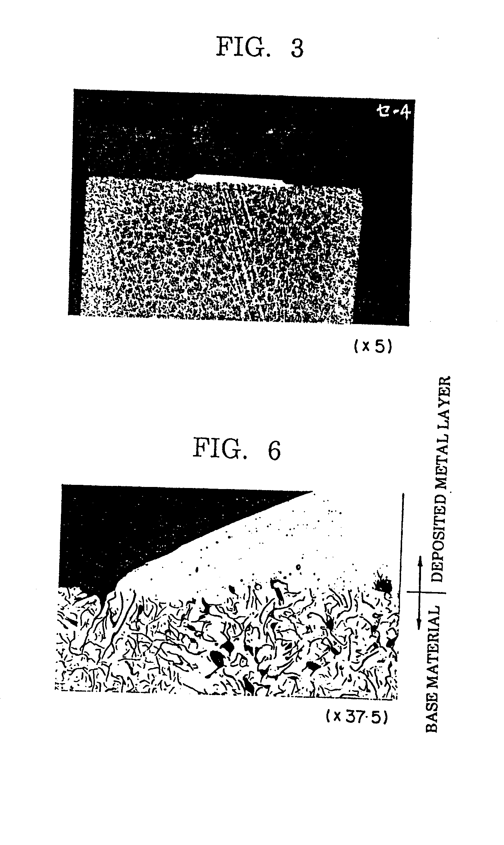

Now, further operational details of this first stage in the practice of the first preferred embodiment will be set forth. The rate of flowing of the argon gas was about 10 liters per minute. The base metal block 1 was moved in the rightwards direction as seen in Fig. 1 at a speed of about 200 mm per minute, so as to advance the process along its surface. The laser had a power output of about 2.0 Kw in the multi-mode output mode, and the diameter of the laser beam focus, which was approximately circular, was approximately 7 mm. Thereby, the copper coating layer 8 was formed in the trail of the oscillating laser beam focus along the surface of the base metal block 1. Fig. 3 is an optical photomicrograph taken at a magnification of 5X, showing the metallic structure of a longitudinal cross section taken through the cast iron base metal block 1 with this copper containing coating layer 8 formed in the above described manner on its upper surface.

*THE PADDING STAGE*

Next, the second operational stage of the first preferred embodiment of the padding method of the present invention will be described. In this first preferred embodiment, the quantity 4 of said powder for forming the copper containing coating layer 8 consisted of substantially pure copper (Cu) powder of particle diameter approximately 50 microns.

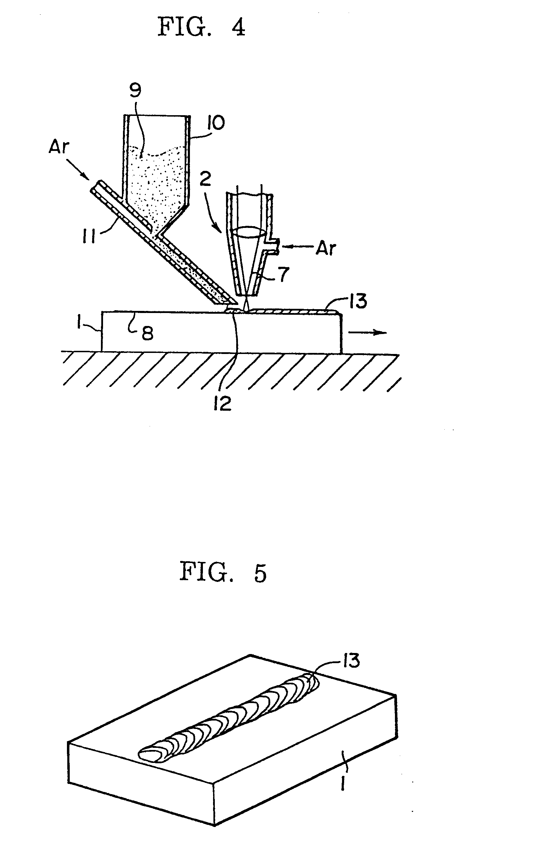

Referring first to the view of Fig. 4 which is a general side view of said second operational stage of practice and applies to all of the preferred embodiments which will be described as well as to the two comparison examples which will be detailed shortly, the reference numeral 1 therein again denotes the block of base metal, with the copper containing coating layer 8 formed in the above described manner on its upper surface (these elements had by now cooled down to substantially ambient temperature); and the reference numeral 2, as before, denotes a laser gun which may typically in fact be the same laser gun as utilized in the first stage of operation, although this is not to be considered as limitative of the present invention; thus this laser gun 2 again incorporated, in these preferred embodiments, a convex lens which focused and concentrated a laser beam which was produced by a per se conventional type of laser not particularly shown in the figures (located generally above the Fig. 4 apparatus), so that the laser beam shone through said convex lens and was converted into a converging light beam 7 thereby, and this converging light beam 7, as its rays converged, fell out from the tip of the laser gun 2 in a focus upon the surface of the copper coating layer 8 on the upper surface of the base metal block 1. Meanwhile, the base metal block 1 with the copper coating layer 8 on its upper surface was moved by a driving means, not particularly shown in the figures, in the rightwards direction as seen in Fig. 4 so as to advance the process along its surface, again along the approximate center line of the 70 x 40 mm upper surface 1a of the base metal block 1 and along the center line of the copper containing coating layer 8. In the way of the swath described by the laser beam focus there was spread a trail 12 of powder for forming a padding layer along said copper containing coating layer 8, said padding powder trail 12 being supplied through a pipe 11 from a hopper 10 which contained a quantity 9 of said powder for padding; a stream of argon gas as a carrier gas was blown through said pipe 11 for aiding with the transport of the padding powder 12, and further argon gas as a shield gas was directed through the laser gun 2 to form a shield around the heated work area. This quantity of padding powder 12 was locally melted onto the surface of the base metal block 1 by the laser beam focus as it described its swath, and in the trail of said laser beam focus solidified to form a padding layer or trail 13 along said 70 x 40 mm upper surface of the base metal block 1, over the copper containing layer 8, as shown in perspective view in Fig. 5 which shows the work piece after this second stage of practice of the method of the present invention. In this first preferred embodiment of the present invention, this powder quantity 9 for forming the padding layer 13 consisted of stellite alloy, composition approximately 24% Cr, approximately 4% W, approximately 0.5% Si, approximately 0.1% B, not more than about 0.4% C, and remainder essentially Co. The cooling of the work piece, i.e. of the trail 13 of melted coating powder and of the upper surface portion of the base metal block 1 and of the copper containing layer 8 thereon, was again, as before, accomplished principally by endothermic absorption.

Now, further operational details of this padding stage of the first preferred embodiment will be set forth. The discharge rate of the argon gas over the area including the laser beam focus was about 10 liters per minute. The base metal block 1 was moved in the rightwards direction as seen in Fig. 4 at a speed of about 100 mm per minute, so as to advance the process along its surface. The laser had a power output of about 1.5 Kw in the multi-mode output mode, and the diameter of the laser beam focus was approximately 7 mm. Thereby, the padding layer 13 was formed in the trail of the oscillating laser beam focus along the surface of the base metal block 1.

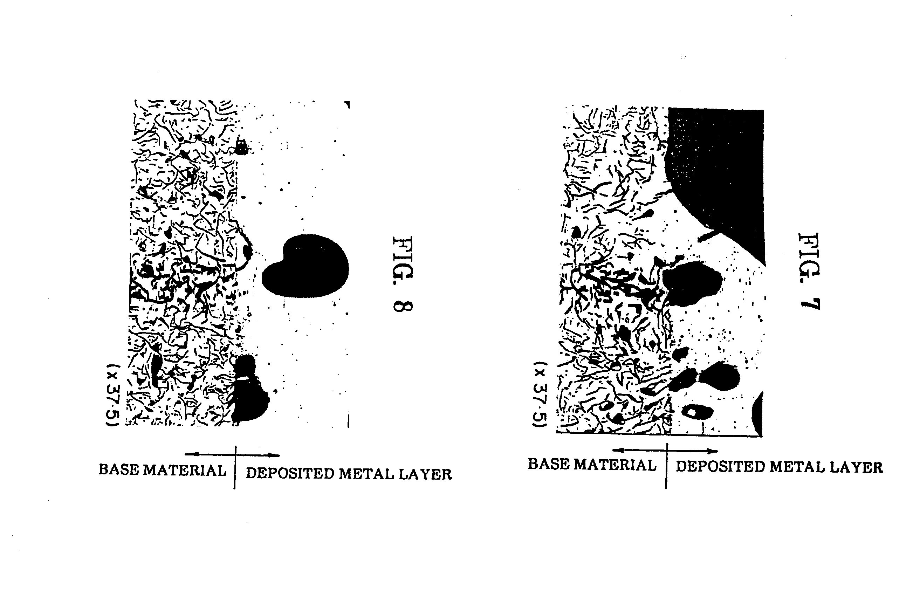

In Fig. 6, there is shown a longitudinal cross sectional photographic view of the metallic structure of the resulting padding layer 13, and of the portion of the base metal block 1 adjoining thereto, at a magnification of 37.5X. As will be understood from this photograph, the overlaying and padding of the padding metal layer on the cast iron base metal block was, in the case of this first preferred embodiment, satisfactorily effected without substantially generation of flaws such as cracks or blow holes.

*FIRST COMPARISON EXAMPLE*

By contrast, another workpiece was produced by substantially the same method steps as outlined above with regard to the first preferred embodiment of the present invention, except that the initial step of forming the copper containing coating layer 8 on the cast iron block 1 was omitted, and only the stellite layer 13 was formed according to the second laser padding stage. In Fig. 7, there is shown a longitudinal cross sectional photographic view of the metallic structure of the resulting padding layer 13, and of the portion of the base metal block 1 adjoining thereto, at a magnification of 37.5X. As will be understood from this photograph, the overlaying and padding of the padding metal layer on the cast iron base metal block was, in the case of this first comparison example, not very satisfactorily effected, and a substantial quantity of blow holes (the black portions in the Fig. 7 view) were generated in the padding layer. Also a substantial quantity of cracks (the wedge shaped portions at the surface of the padding material layer which extend into the interior thereof) were generated. Therefore this first comparison example did not produce satisfactory padding effectiveness, thus emphasizing the advantages of the method of the present invention.

## SECOND COMPARISON EXAMPLE

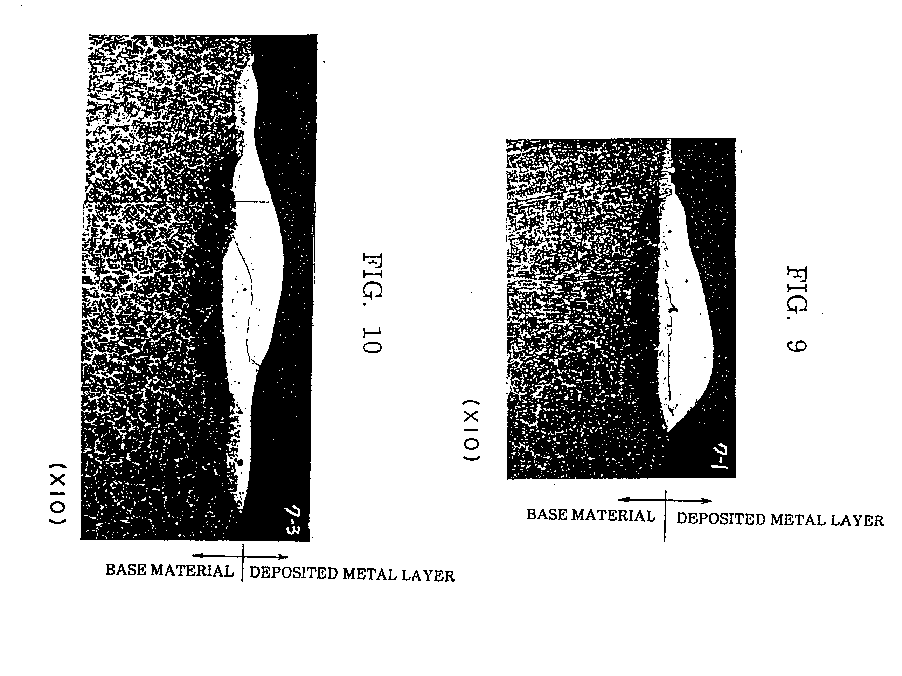

By contrast, another workpiece was produced by substantially the same method steps as outlined above with regard to the first comparison example, except that the material used for forming the padding layer, instead of being stellite powder, was a Ni alloy powder of composition approximately 0.07% C, approximately 0.06% Si, approximately 0.08% Fe, and balance essentially Ni, and being of mean particle diameter about 40 microns. In Fig. 8, there is shown a longitudinal cross sectional photographic view of the metallic structure of the resulting padding layer 13, and of the portion of the base metal block 1 adjoining thereto, again at a magnification of 37.5X. As will be understood from this photograph, the overlaying and padding of the padding metal layer on the cast iron base metal block was, in the case of this second comparison example also, not very satisfactorily effected, and a substantial quantity of blow holes (the black portions in the Fig. 8 view) were generated in the padding layer. Therefore this second comparison example did not produce satisfactory padding effectiveness, thus again emphasizing the advantages of the method of the present invention.

## THE SECOND PREFERRED EMBODIMENT

The steps performed during the practice of the second preferred embodiment of the padding method of the present invention were substantially as those performed during the practice of the first preferred embodiment as described above, except as follows. Namely, the material utilized for the quantity 4 of said powder for coating was Cu - Ni alloy powder of composition approximately 15% Ni, and balance essentially Cu, of mean particle diameter approximately 40 microns. Further, the material utilized for the quantity 9 of said powder for padding was Ni alloy powder of composition approximately 14.4% Cr, approximately 5.5% Fe, approximately 4.8% Si, approximately 2.0% W, approximately 0.6% B, approximately 0.3% C, and balance essentially Ni, of mean particle diameter again approximately 40 microns. Further, the laser processing conditions for the forming of the copper containing coating layer were that: the rate of flowing of the argon gas was about 10 liters per minute; the base metal block 1 was moved in the rightwards direction as seen in Fig. 1 at a speed of about 200 mm per minute, so as to advance the process along its surface; the laser had a power output of about 2.0 Kw in the multi-mode output mode; and the diameter of the laser beam focus, which was approximately circular, was approximately 7 mm. And the laser processing conditions for the forming of the padding layer were that: the rate of flowing of the argon gas was again about 10 liters per minute; the base metal block 1 was moved in the rightwards direction as seen in Fig. 1 at a speed of about 100 mm per minute, so as to advance the process along its surface; the laser had a power output of about 1.5 Kw in the multi-mode output mode; and the diameter of the laser beam focus, which was approximately circular, was again approximately 7 mm.

In Fig. 9, there is shown a longitudinal cross sectional photographic view of the metallic structure of the resulting padding layer, and of the portion of the base metal block adjoining thereto, at a magnification of 10X. In this Fig. 9, the black layer portion in the base metal block near the padding layer zone is a first heat affected zone which was created when the Cu - Ni alloy coating layer was formed. The light gray colored layer portion between the above identified heat affected zone and the padding metal layer is a second heat affected layer created when the Ni alloy padding layer was overlaid, and the white layered portion adjacent to said heat affected zone is the Cu - Ni alloy coating layer. The portion above this alloy coating layer is the Ni alloy portion, i.e. the padding metal portion. As will be understood from this photograph, the overlaying and padding of the padding metal layer on the cast iron base metal block was, in the case of this second preferred embodiment also, satisfactorily effected without substantially generation of flaws such as cracks or blow holes.

## THE THIRD PREFERRED EMBODIMENT

The steps performed during the practice of the third preferred embodiment of the padding method of the present invention were substantially as those performed during the practice of the first preferred embodiment as described above, except as follows. Namely, the material utilized for the quantity 4 of said powder for coating was Cu - Sn alloy powder of composition approximately 15% Sn, and balance essentially Cu, of mean particle diameter approximately 40 microns. Further, the material utilized for the quantity 9 of said powder for padding was Ni alloy powder of composition approximately 14.4% Cr, approximately 5.5% Fe, approximately 4.8% Si, approximately 2.0% W, approximately 0.6% B, approximately 0.3% C, and balance essentially Ni, of mean particle diameter again approximately 40 microns. Further, the laser processing conditions for the forming of the copper containing coating layer were that: the rate of flowing of the argon gas was about 10 liters per minute; the base metal block 1 was moved in the rightwards direction as seen in Fig. 1 at a speed of about 150 mm per minute, so as to advance the process along its surface; the laser had a power output of about 3.0 Kw in the multi-mode output mode; and the diameter of the laser beam focus, which was approximately circular, was approximately 12 mm. And the laser processing conditions for the forming of the padding layer were that: the rate of flowing of the argon gas was again about 10 liters per minute; the base metal block 1 was moved in the rightwards direction as seen in Fig. 1 at a speed of about 150 mm per minute, so as to advance the process along its surface; the laser had a power output of about 3.5 Kw in the multi-mode output mode; and the diameter of the laser beam focus, which was approximately circular, was again approximately 12 mm.

In Fig. 10, there is shown a longitudinal cross sectional photographic view of the metallic structure of the resulting padding layer, and of the portion of the base metal block adjoining thereto, again at a magnification of 10X. In this Fig. 10, the black layer portion in the base metal block near the padding layer zone is a first heat affected zone which was created when the Cu - Sn alloy coating layer was formed. The gray colored layer portion between the above identified heat affected zone and the padding metal layer is a second heat affected layer created when the Ni alloy padding layer was overlaid, and the white layered portion adjacent to said heat affected zone is the Cu - Sn alloy coating layer. The portion above this alloy coating layer is the Ni alloy portion, i.e. the padding metal portion. As will be understood from this Fig. 10 photograph, the overlaying and padding of the padding metal layer on the cast iron base metal block was, in the case of this third preferred embodiment also, satisfactorily effected without substantially generation of flaws such as cracks or blow holes.

## CONCLUSION AND DISCLAIMER

Although the present invention has been shown and described in terms of the preferred embodiments thereof, and with reference to the appended drawings, it should not be considered as being particularly limited thereby, since the details of any particular embodiment, or of the drawings, could be varied without, in many cases, departing from the ambit of the present invention. Accordingly, the scope of the present invention is to be considered as being delimited, not by any particular perhaps entirely fortuitous details of the disclosed preferred embodiments, or of the drawings, but solely by the scope of the accompanying claims, which follow.

# WHAT IS CLAIMED IS:

1.  A high energy padding method for forming a padding layer of padding metallic material on the surface of a base piece of cast iron material, comprising the steps of:

(a)  overlaying a coating of metallic material containing copper on said surface of said base piece of cast iron material;

and:

(b)  depositing a layer of said metallic padding material on said surface of said base piece of cast iron material over said copper containing coating metallic material layer thereon while using a relatively high energy density energy source as a source of heat.

2.  A high energy padding method according to claim 1, wherein the thickness of said overlaid copper containing coating metallic material layer is between about 30 microns and about 500 microns.

3. A high energy padding method according to claim 1, wherein the thickness of said overlaid copper containing coating metallic material layer is between about 50 microns and about 200 microns.

4. A high energy padding method according to claim 1, wherein the copper content of said metallic material containing copper is between about 80% and about 100%.

5. A high energy padding method according to claim 1, wherein said overlaid copper containing coating metallic layer is formed by depositing of a metallic material containing copper on said surface of said piece of cast iron material while using a relatively high energy density energy source as a source of heat.

FIG. 1

FIG. 2

## FIG. 3

(×5)

## FIG. 6

(×37·5)

BASE MATERIAL | DEPOSITED METAL LAYER

FIG. 4

FIG. 5

## FIG. 7

(x 37·5)

DEPOSITED METAL LAYER

BASE MATERIAL

## FIG. 8

(x 37·5)

DEPOSITED METAL LAYER

BASE MATERIAL

5|5

## FIG. 9

(X10)

## FIG. 10

(X10)